# EUROPEAN PATENT APPLICATION

(11) **EP 4 550 550 A1**
(43) Date of publication of application: **07.05.2025**
(21) Application number: 23830956.1
(22) Date of filing: 01.06.2023
(51) Int. Cl.: H01M 50/296, H01M 50/588, H01M 50/593

(54) **BATTERY PACK**

(30) Priority: 29.06.2022 JP 2022105055
(71) Applicant: Panasonic Energy Co., Ltd., Osaka 570-8511 (JP)
(72) Inventor: ASAI, Hideo, Kadoma-shi, Osaka 571-0057 (JP)
(74) Representative: Novagraaf International SA
(86) International application number: PCT/JP2023/020417
(87) International publication number: WO 2024/004506

(57) **Abstract**

This battery pack includes: one or more secondary battery cells each including electrodes that are positive and negative; a terminal that is made of metal and is electrically connected to the electrodes of the one or more secondary battery cells; a terminal holder integrated with the terminal; and an outer covering case that stores the one or more secondary battery cells and includes a holder storage space that stores the terminal holder. The outer covering case is a part of the holder storage space and includes a recess at a position opposite the terminal.

## Description

### Technical Field

The present disclosure relates to battery packs.

### Background Art

In an electrical device that uses a chargeable secondary battery such as a lithium-ion secondary battery, a battery pack is used in which two or more secondary battery cells are stored in such a manner that the secondary battery can be replaced (for example, Patent Literature (PTL) 1). The battery pack connected to the electrical device or having been detached from the electrical device and fitted into a dedicated charger is charged.

Such a battery pack requires an electrical contact to connect to a battery pack body or a charger that charges the battery pack. In order to ensure stable electrical connection at the electrical contact, a connection terminal of the battery pack or charger is often elastic.

Suppose now that a connection terminal of the battery pack is made elastic. Upon attachment of such an elastic connection terminal to the battery pack, first, the connection terminal is set on a terminal holder in place to build a holder assembly, and then the holder assembly is fitted to the casing of the battery pack.

However, with the conventional battery pack, if the mounting position of the connection terminal on the terminal holder varies when building the holder assembly, the terminal holder may not be properly positioned with respect to the casing of the battery pack during assembling, which is problematic.

### Citation List

### Patent Literature

PTL 1: Unexamined Japanese Patent Publication No. H06-333547

### Summary of Invention

One object of the present disclosure is to provide a battery pack that can be assembled even if the mounting position of a terminal on a terminal holder varies.

A battery pack according to one embodiment of the present invention includes: one or more secondary battery cells each including electrodes that are positive and negative; a terminal that is made of metal and is electrically connected to the electrodes of the one or more secondary battery cells; a terminal holder integrated with the terminal; and an outer covering case that stores the one or more secondary battery cells and includes a holder storage space that stores the terminal holder. The outer covering case is a part of the holder storage space and includes a recess at a position opposite the terminal.

A battery pack manufacturing method according to another embodiment of the present invention is a method for manufacturing a battery pack including: one or more secondary battery cells each including electrodes that are positive and negative; a terminal that is made of metal and is electrically connected to the electrodes of the one or more secondary battery cells; a terminal holder including a resin member and a metal piece protruding from a surface of the resin member, the terminal holder being integrated with the terminal; and an outer covering case that stores the one or more secondary battery cells and includes a holder storage space that stores the terminal holder. The method includes: joining the terminal to the metal piece by spot welding; and positioning the terminal holder in the holder storage space to assume a posture that causes a portion of the terminal to face a recess formed on a part of the holder storage space of the outer covering case.

With the battery pack according to one embodiment of the present invention, even if the mounting position of the terminal on the terminal holder varies when integrating the terminal and the terminal holder, the terminal is inserted into a portion of the recess formed at the position opposite the terminal, thus the variations can be absorbed, and the terminal holder can be stored into the holder storage space.

### Brief Description of Drawings

[Fig. 1] Fig. 1 is a perspective view of a battery pack according to Embodiment 1 of the present invention.
[Fig. 2] Fig. 2 is a vertical cross-sectional view taken along line II-II in Fig. 1.
[Fig. 3] Fig. 3 is an enlarged cross-sectional view of relevant parts illustrated in Fig. 2.
[Fig. 4] Fig. 4 is a cross-sectional view illustrating a terminal holder illustrated in Fig. 3.
[Fig. 5] Fig. 5 is an enlarged cross-sectional view illustrating a terminal holder being inserted into an outer covering case illustrated in Fig. 3.
[Fig. 6] Fig. 6 is a perspective view of a terminal holder.
[Fig. 7] Fig. 7 is an exploded perspective view of a terminal holder.
[Fig. 8] Fig. 8 is an enlarged cross-sectional view of relevant parts of a battery pack according to a comparative example.
[Fig. 9] Fig. 9 is a cross-sectional view illustrating the position of connection between a terminal holder and a terminal part illustrated in Fig. 4 being offset to the left.
[Fig. 10] Fig. 10 is a cross-sectional view illustrating the position of connection between a terminal holder and a terminal part illustrated in Fig. 4 being offset to the right.
[Fig. 11] Fig. 11 is an enlarged cross-sectional view illustrating a terminal holder illustrated in Fig. 9 being inserted into an outer covering case.
[Fig. 12] Fig. 12 is an enlarged cross-sectional view illustrating a terminal holder illustrated in Fig. 10 being inserted into an outer covering case.
[Fig. 13] Fig. 13 is a perspective view of an insulating plate.
[Fig. 14] Fig. 14 is an exploded perspective view illustrating an insulating plate being placed on a wall part.
[Fig. 15] Fig. 15 is an enlarged cross-sectional view illustrating an insulating plate having been placed on a wall part.
[Fig. 16] Fig. 16 is an enlarged cross-sectional view of relevant parts of a battery pack according to Embodiment 2 of the present invention.
[Fig. 17] Fig. 17 is an enlarged cross-sectional view of relevant parts of a battery pack according to Embodiment 2 of the present invention.

### Description of Embodiments

Embodiments of the present invention may be specified by configurations, features, and the like indicated below.

A battery pack according to another embodiment of the present invention may be configured in any one of the aforementioned embodiments so that a protrusion is formed around the recess, and the terminal part abuts the protrusion.

Furthermore, in any one of the aforementioned embodiments, a battery pack according to another embodiment of the present invention may further include an insulating plate that is insulative and is disposed on a wall surface of the holder storage space, and the recess may be formed on the insulating plate. With this configuration, it is possible to easily form the recess in the holder storage space of the outer covering case by adding another member including a recess to the outer covering case.

Moreover, in a battery pack according to another embodiment of the present invention, a plurality of paper sheets may be stacked to form the insulating plate in any one of the aforementioned embodiments.

Moreover, in a battery pack according to another embodiment of the present invention, the insulating plate may include: a first surface on which the recess is formed; and a second surface extending at an angle from the first surface in any one of the aforementioned embodiments.

Moreover, in a battery pack according to another embodiment of the present invention, the terminal holder may include: a resin member; and a metal piece protruding from a surface of the resin member, and the terminal part may be joined to the metal piece and integrated with the terminal holder in any one of the aforementioned embodiments.

Moreover, in a battery pack according to another embodiment of the present invention, the terminal part may be joined to the metal piece by spot welding in any one of the aforementioned embodiments.

Moreover, in a battery pack according to another embodiment of the present invention, the terminal part may be bent in an L shape, may be joined to the metal piece at one end, may be bent in a V shape at the other end, and may include a connection terminal that is connected to an external element in any one of the aforementioned embodiments.

Hereinafter, exemplary embodiments of the present invention will be described with reference to the drawings. Note that the exemplary embodiments described below are mere illustrations for embodying the technical idea of the present invention; the present invention is not limited to those described below. The present specification should not be considered limiting in any way the members recited in the claims to the members indicated in the exemplary embodiments. In particular, the dimensions, materials, shapes, relative positioning, etc., of components indicated in the exemplary embodiments are not intended to limit the scope of the present invention thereto, but are merely exemplary, unless specifically noted otherwise. Note that there are cases where the size, positional relationship, etc., of the members illustrated in the drawings are exaggerated for clarity of explanation. Furthermore, in the following description, the same name and reference signs indicate the same or similar members, and detailed description thereof will be omitted, as appropriate. Moreover, the elements included in the present invention may be realized by forming two or more elements out of the same member so that one member functions as two or more elements or by allocating the functions of one member to two or more members.

The battery pack according to the present invention can be used as a power supply for portable electrical devices such as a radio, an electrical cleaner, and an electric tool, or as a backup power supply of a server for stationary energy storage usage or a power supply device for homes, offices, and factories, and can also be used as a power supply for driving an electric assisted bicycle or as a power supply for driving vehicles such as an electric scooter, an electric cart, a hybrid vehicle, and an electric vehicle, for example. As one exemplary embodiment of the present invention, a battery pack to be used as a power supply for portable radios will be described below.

### [Embodiment 1]

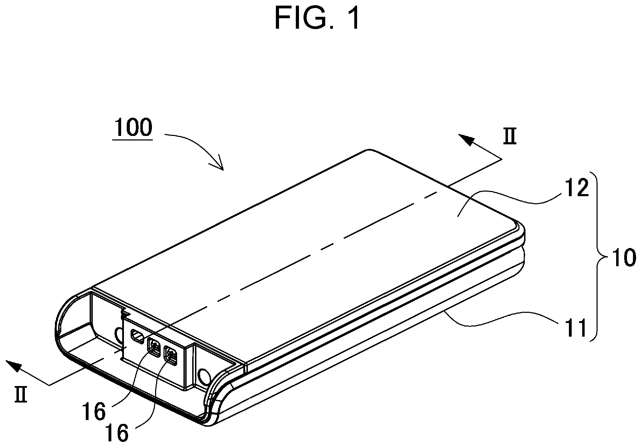

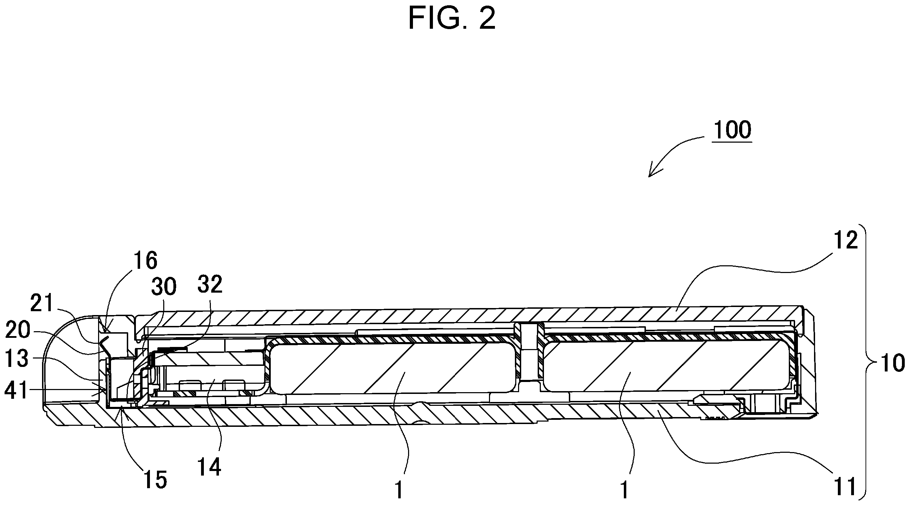

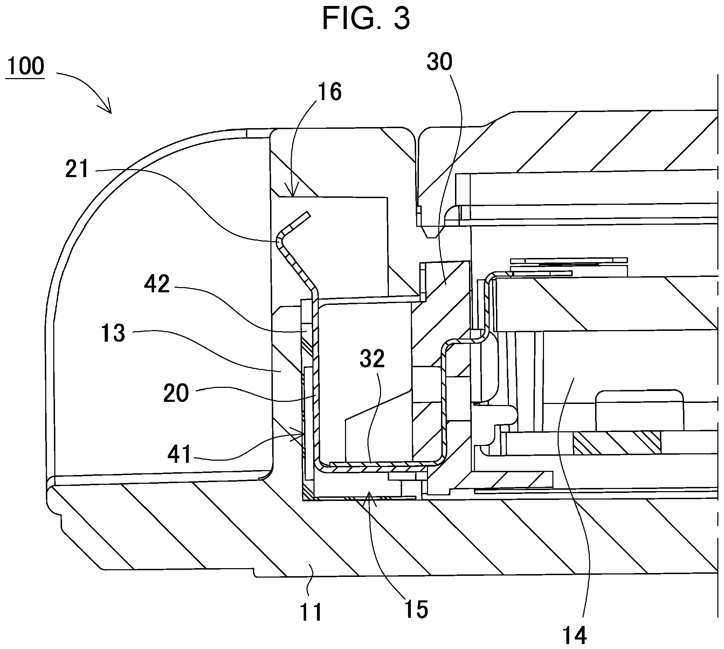

Fig. 1 to Fig. 3 illustrate battery pack 100 according to Embodiment 1 of the present invention. In these figures, Fig. 1 is a perspective view of battery pack 100 according to Embodiment 1 of the present invention, Fig. 2 is a vertical cross-sectional view taken along line II-II in Fig. 1, and Fig. 3 is an enlarged cross-sectional view of relevant parts illustrated in Fig. 2. Battery pack 100 illustrated in these figures includes one or more secondary battery cells 1, terminal part 20, terminal holder 30 connected to this terminal part 20, and outer covering case 10.

### (Outer Covering Case 10)

Outer covering case 10 stores one or more secondary battery cells 1, a battery holder, and the like. The exterior of this outer covering case 10 is box-shaped, as illustrated in Fig. 1. Outer covering case 10 is divided in half as upper case 12 and lower case 11, for example. This outer covering case 10 is made of a highly insulating material that is, for example, a resin such as polycarbonate and a polycarbonate-acrylonitrile butadiene styrene (PC-ABS) alloy. Holder storage space 15 that stores terminal holder 30 is provided inside outer covering case 10, as illustrated in the cross-sectional views in Fig. 2 and Fig. 3. Holder storage space 15 is formed between wall part 13 formed on lower case 11 of outer covering case 10 and inner block 14 located inside outer covering case 10.

### (Secondary Battery Cell 1)

Prismatic or cylindrical secondary battery cells can be used as one or more secondary battery cells 1. In the example illustrated in Fig. 2, two prismatic secondary battery cells 1 are arranged side by side when in use. Note that the number, positions, etc., of secondary battery cells 1 are not limited to those applied in this example and can be set to an arbitrary number, arbitrary positions, etc., as appropriate. Each of secondary battery cells 1 includes positive and negative electrodes. The positive and negative electrodes are preferably provided on one end surface of secondary battery cell 1. Known secondary batteries such as lithium-ion secondary batteries, nickel-hydrogen batteries, and nickel-cadmium batteries can be used, as appropriate, as secondary battery cells 1.

### (Terminal Holder 30)

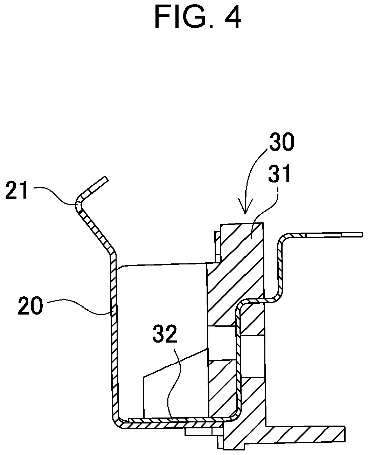

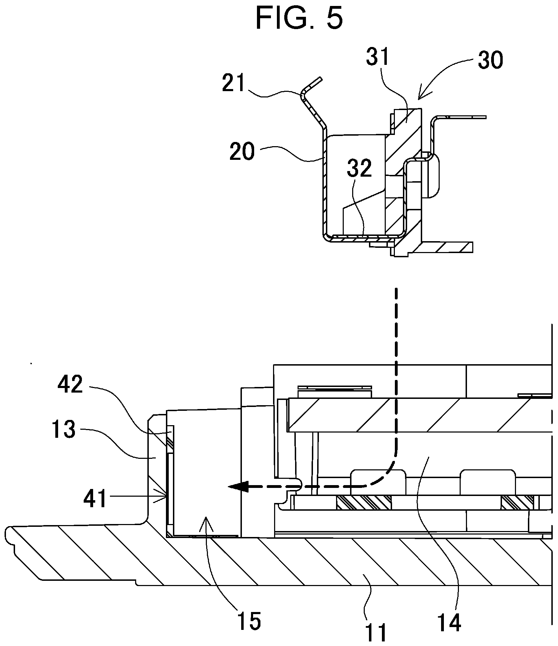

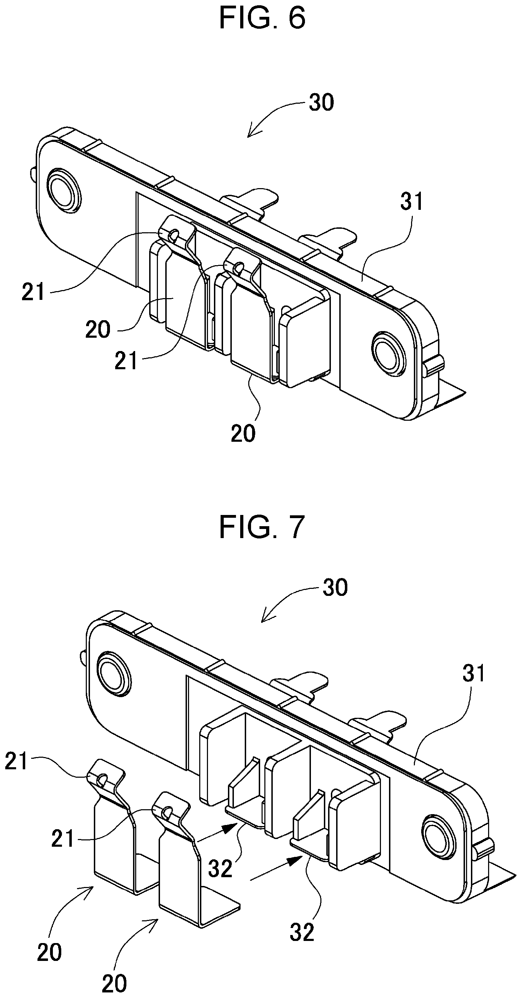

Terminal holder 30 is integrated with terminal part 20, as illustrated in the cross-sectional view in Fig. 3. Fig. 4 is a cross-sectional view of terminal holder 30, Fig. 5 illustrates this terminal holder 30 being inserted into outer covering case 10, Fig. 6 is a perspective view of terminal holder 30, and Fig. 7 is an exploded perspective view of terminal holder 30. As illustrated in these figures, terminal holder 30 includes resin member 31 and metal piece 32. Resin member 31 is formed in the shape of a plate, as illustrated in Fig. 7. Insert-molding is applied such that metal piece 32 protrudes from a surface of this plate-shaped resin member 31, as illustrated in Fig. 4 and Fig. 7.

### (Terminal Part 20)

Meanwhile, terminal part 20 has one end electrically connected to the electrodes of one or more secondary battery cells 1 and the other end exposed to the outside to form connection terminal 21, which is connected to an external element, as illustrated in Fig. 2. Terminal part 20 is formed of an electrically conductive, elastic material. This terminal part 20 is bent in an L shape, as illustrated in Fig. 7; as a result of being bent, terminal part 20 can easily exhibit elasticity. Furthermore, terminal part 20 has one end joined to metal piece 32 of terminal holder 30 and the other end bent in a V shape. Terminal part 20 having this structure constitutes connection terminal 21 that allows the abutment of the valley portion of the V shape. Furthermore, outer covering case 10 includes open window 16 so that a portion of connection terminal 21 out of terminal part 20 is exposed to the outside, as illustrated in the cross-sectional view in Fig. 3.

Terminal part 20 is formed by bending a metal plate. In the example illustrated in Fig. 6 and Fig. 7, two terminal parts 20 corresponding to the positive electrode and the negative electrode are joined to two metal pieces 32 protruding from terminal holder 30. In this manner, terminal part 20, which is made of metal, is joined to metal piece 32, which is also made of metal, and is thus integrated with terminal holder 30. Terminal part 20 and metal piece 32 are preferably joined together by welding. Thus, the metals can be easily joined together. These are more preferably joined together by spot welding in which laser light or the like is used. Terminal holder 30 to which terminal part 20 has been integrally joined in this manner is housed in holder storage space 15, as indicated by the dashed line in Fig. 5.

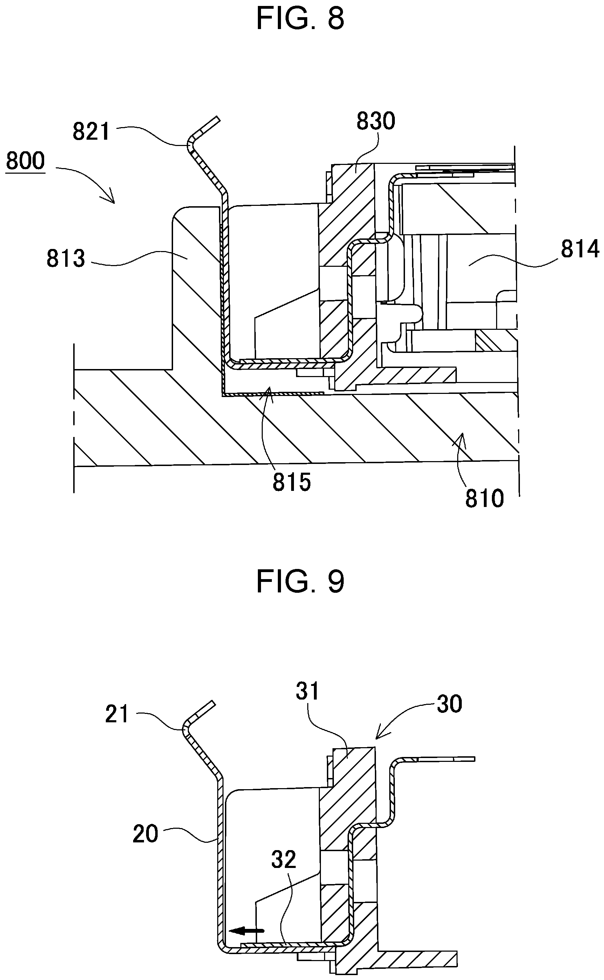

If a mismatch occurs between the welding position and the design position when welding terminal part 20 and metal piece 32 together, there may be a situation where these cannot be stored into holder storage space 15. As illustrated in the cross-sectional view of battery pack 800 according to the comparative example illustrated in Fig. 8, holder storage space 815 is formed between wall part 813 formed on outer covering case 819 and inner block 814 located inside outer covering case 810. When there is a gap between the exterior of terminal holder 830 and the inner surface of holder storage space 815 while terminal holder 830 is stored in holder storage space 815, terminal holder 830 may wobble, leading to reduced connection stability between connection terminal 821 and a terminal of a charger, an electrical device, or the like. Therefore, the inner shape of holder storage space 815 is designed so as to match the external shape of terminal holder 830, in other words, so as to prevent wobbling.

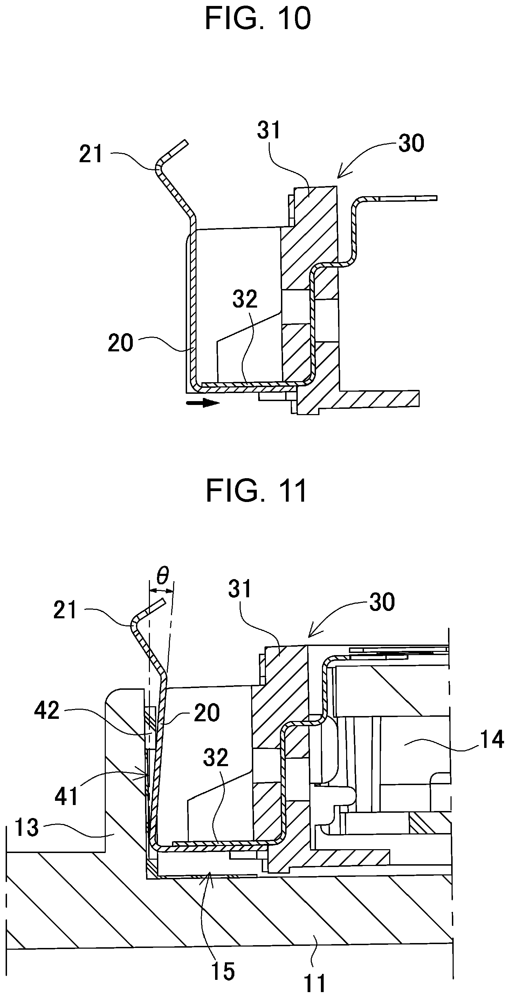

When the position of connection between metal piece 32 and terminal part 20 is offset from the proper design position to the left as indicated by the arrow in Fig. 9, terminal holder 30 with terminal part 20 joined thereto has a breadth greater than the design value, which may result in the failure to be stored into holder storage space 15. On the other hand, when the position of connection between metal piece 32 and terminal part 20 is adjusted and ends up being offset from the proper design position further to the right as indicated by the arrow in Fig. 10, the position of connection terminal 21 of terminal part 20 is offset from the proper position, which is undesirable from the perspective of electrical connection stability. However, improving the accuracy of the position of connection between metal piece 32 and terminal part 20 is difficult due to the issues of manufacturing intersection or the like, and may also lead to reduced yield, for example, which is disadvantageous in terms of manufacturing cost.

In view of this, in battery pack 100 according to the present exemplary embodiment, recess 41 is formed at a position of a part of holder storage space 15 of outer covering case 10 that is opposite to terminal part 20. In the example illustrated in the cross-sectional view in Fig. 3, recess 41 is formed on a part of the inner surface of wall part 13. With this configuration, even when terminal holder 30 with terminal part 20 joined thereto has a breadth greater than the design value and cannot be simply stored into holder storage space 15 as illustrated in Fig. 9, it is possible to store terminal holder 30 into holder storage space 15 by inserting a portion of terminal part 20 into recess 41 as illustrated in Fig. 11. In this manner, even when the position at which terminal part 20 is fixed to terminal holder 30 varies, the variations can be absorbed at recess 41 and thus, even this terminal holder 30 can be stored into holder storage space 15.

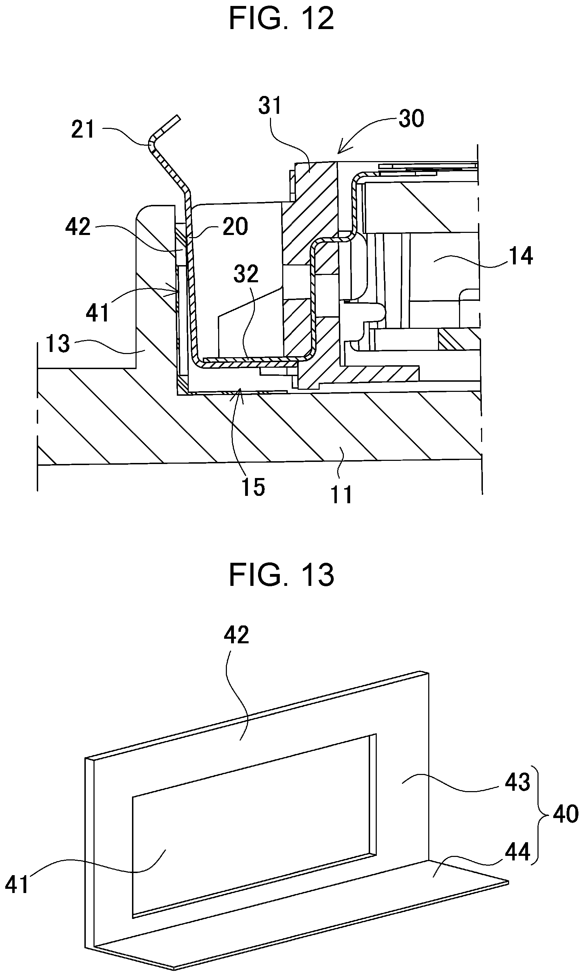

Furthermore, when the breadth of terminal holder 30 with terminal part 20 joined thereto is less than the design value as illustrated in Fig. 10, terminal holder 30 can be stored into holder storage space 15 as illustrated in Fig. 12.

Regarding the size of recess 41, the horizontal width thereof is set greater than at least the breadth of terminal part 20. When two terminal parts 20 for the positive electrode and the negative electrode are provided as illustrated in Fig. 6, the horizontal width is set great enough to allow the insertion of both of these two terminal parts 20. As a result, the number of recesses 41 to be formed is one, meaning that recess 41 can be easily formed, which is advantageous. Note that when two or more terminal parts 20 are provided, recess 41 may be formed on insulating plate 40, which will be described later, at a position corresponding to each terminal part 20. When two or more relatively small recesses 41 corresponding to the sizes of respective terminal parts 20 are formed in this manner, the strength of insulating plate 40 can be maintained as compared to the configuration in which single large recess 41 is formed.

The vertical length of recess 41 is set great enough to hold a portion of terminal part 20 in recess 41 when the breadth of terminal holder 30 with terminal part 20 joined thereto is greater than the design value as illustrated in Fig. 11. The vertical length of recess 41 is also correlated with the thickness of protrusion 42, which will be described later, and is designed so that the angle of connection terminal 21 at the tip of terminal part 20 does not change significantly while a portion of terminal part 20 fits within recess 41. In other words, when the vertical length of recess 41 is too small, the tilt angle of terminal part 20 in abutment with protrusion 42 is large and as a result, the position of connection terminal 21 is significantly offset. For example, the vertical length of recess 41 and the thickness of protrusion 42 are designed so that angle θ at which terminal part 20 is inclined with respect to the vertical direction is less than five degrees while terminal part 20 fits within recess 41.

### (Protrusion 42)

As a result of providing recess 41 on a portion of the inner surface of wall part 13, protrusion 42 is formed around recess 41. This protrusion 42 can guide terminal part 20 by abutment therewith and hold terminal part 20 so that connection terminal 21 is exposed through open window 16. In other words, causing terminal part 20 to abut protrusion 42 minimizes stability deterioration that occurs when recess 41 is provided on wall part 13, the area of contact with terminal part 20 is reduced, and a gap is formed between terminal part 20 and a portion of the inner surface of wall part 13.

### (Insulating Plate 40)

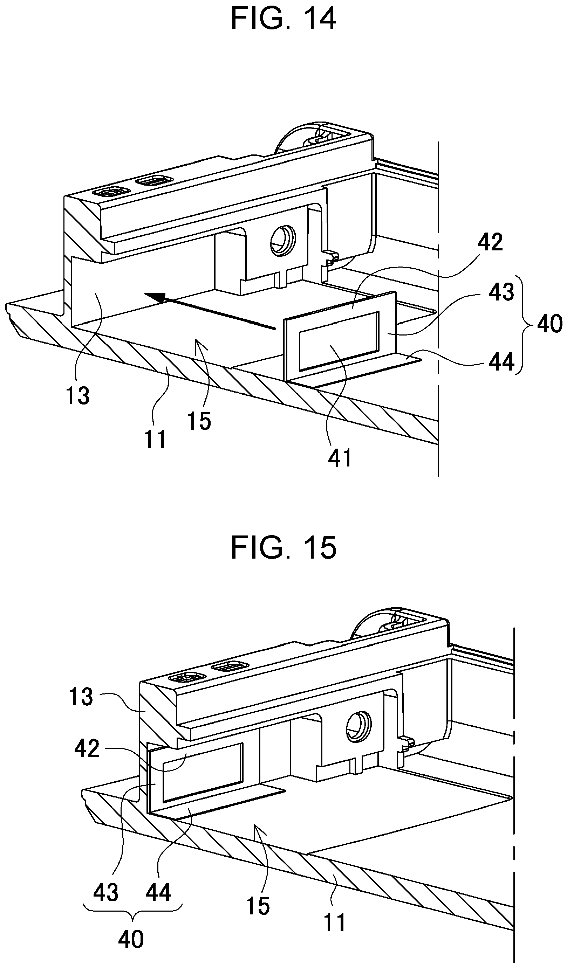

In order to allow recess 41 to be easily formed on wall part 13 of holder storage space 15, battery pack 100 according to Embodiment 1 additionally includes insulating plate 40. Insulating plate 40 is generally formed flat and recess 41 is formed in the middle thereof as illustrated in the perspective view in Fig. 13. By placing this insulating plate 40 on the inner surface of wall part 13 of holder storage space 15 as illustrated in Fig. 14, it is possible to easily form recess 41 on outer covering case 10 as illustrated in Fig. 15. Note that wall part 13 of outer covering case 10 is designed in advance to have a thickness reduced by an amount corresponding to the thickness of insulating plate 40. Accordingly, it is possible to form recess 41 without changing the inner diameter of holder storage space 15. Note that adhesive, a double-sided tape, or the like may be used to fix insulating plate 40 to wall part 13. In this situation, the thickness of wall part 13 is designed in consideration of the thickness of the adhesive, the double-sided tape, or the like.

Insulating plate 40 is made of insulating material, making it possible to avoid unintended electrical conduction, short-circuiting, or the like while allowing the abutment of terminal part 20, which is made of metal. Insulating plate 40 can be formed as a stacked body. Thus, it is possible to easily form recess 41 by stacking, on a flat sheet, a sheet in which an opening has been formed in advance. The material of the sheet to be stacked may be paper, talc, or resin. Particularly, paper, which imposes less burdens on the environment, is favorable in terms of accessibility, recyclability, and the like. Furthermore, insulating plate 40 including recess 41 may be formed by resin molding.

Insulating plate 40 may not only be formed flat, but also include first surface 43 on which recess 41 is formed and second surface 44 extending at an angle from this first surface 43, as illustrated in Fig. 13. This makes it easy for insulating plate 40 to stand, as illustrated in Fig. 3, etc., and also allows for improved handleability.

### [Embodiment 2]

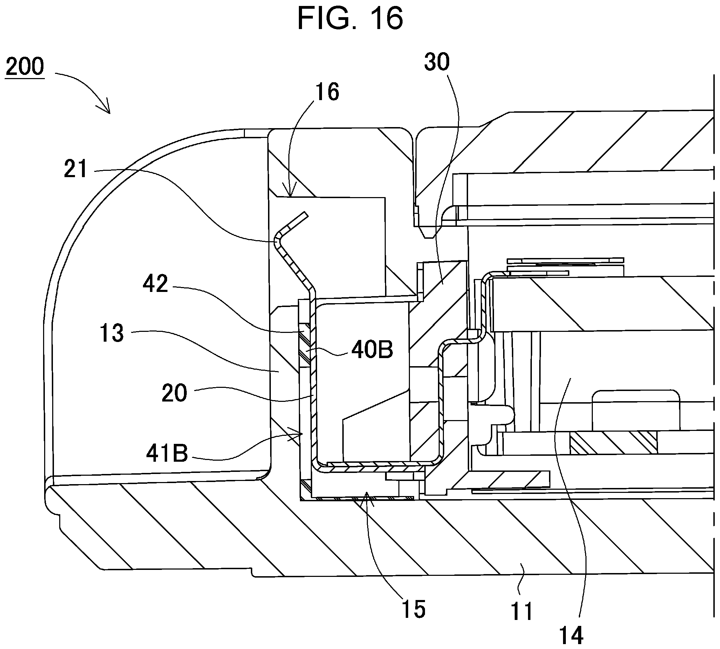

Note that recess 41 is formed by depressing first surface 43 of insulating plate 40 in the example illustrated in Fig. 3, Fig. 13, etc., but this configuration is not limiting; recess 41 may be formed by making an opening in insulating plate 40. This example is illustrated in Fig. 16 as battery pack 200 according to Embodiment 2. In this figure, components that are substantially the same as those in Embodiment 1 described above will be assigned the same reference signs and detailed description thereof will be omitted. Insulating plate 40B illustrated in this figure is shaped to have an opening made by removing a portion thereof corresponding to recess 41B; when insulating plate 40B is disposed on wall part 13 of outer covering case 10, recess 41B is formed on the wall surface of holder storage space 15. With this configuration, the opening can be easily formed in insulating plate 40B, which is advantageous.

### [Embodiment 3]

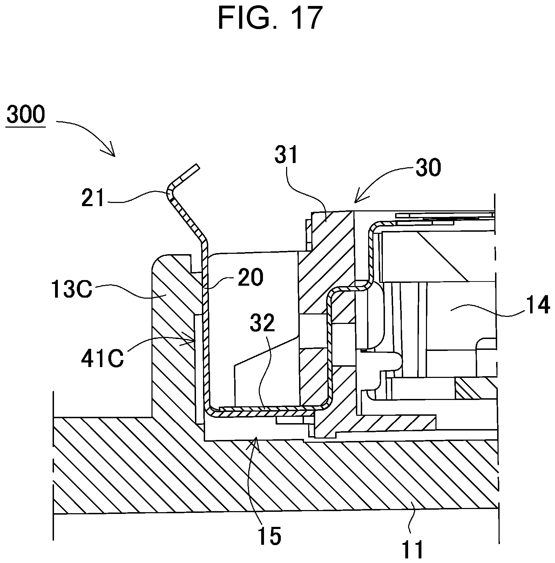

A method for forming recess 41 on wall part 13 of outer covering case 10 may be providing wall part 13 that has been processed, other than providing another member such as insulating plate 40 described above. This example is illustrated in the cross-sectional view in Fig. 17 as battery pack 300 according to Embodiment 3. In this figure, components that are substantially the same as those in Embodiment 1 described above will be assigned the same reference signs and detailed description thereof will be omitted. Outer covering case 10 illustrated in Fig. 17 is formed by resin molding so that recess 41C is formed integrally with wall part 13C in advance. In this situation, die cutting is complex, but can be realized using a slide mold or the like. With this configuration, it is not necessary to prepare another member such as an insulating plate and thus, the manufacturing process can be simplified, which is advantageous. The drawback is increased cost of the die.

### [Method for manufacturing Battery Pack]

A method for assembling battery pack 100 described above will be described below. First, terminal part 20 is joined to metal piece 32 by spot welding. Next, terminal holder 30 is positioned in holder storage space 15 to assume a posture that causes a portion of terminal part 20 to face recess 41 formed on a part of holder storage space 15 of outer covering case 10. Thus, even if the mounting position of terminal part 20 on terminal holder 30 varies when integrating terminal part 20 and terminal holder 30, terminal part 20 is inserted into a portion of recess 41 formed at the position opposite terminal part 20, thus the variations can be absorbed, and terminal holder 30 can be stored into holder storage space 15.

### Industrial Applicability

The battery pack according to the present invention can be favorably used as a power supply for radios or a power supply for portable electrical devices such as an electrical cleaner and an electric tool, for example. Furthermore, the battery pack can also be used, as appropriate, as a power supply device for vehicles such as an electric assisted bicycle and an electric cart, for example.

### Reference Signs List

100, 200, 300, 800 battery pack
1 secondary battery cell
10 outer covering case
11 lower case
12 upper case
13, 13C wall part
14 inner block
15 holder storage space
16 open window
20 terminal part
21 connection terminal
30 terminal holder
31 resin member
32 metal piece
40, 40B insulating plate
41, 41B, 41C recess
42 protrusion
43 first surface
44 second surface

## Claims

1. A battery pack comprising:
one or more secondary battery cells each including electrodes that are positive and negative;
a terminal that is made of metal and is electrically connected to the electrodes of the one or more secondary battery cells;
a terminal holder integrated with the terminal; and
an outer covering case that stores the one or more secondary battery cells and includes a holder storage space that stores the terminal holder, wherein
the outer covering case is a part of the holder storage space and includes a recess facing the terminal.

2. The battery pack according to claim 1, further comprising:
a protrusion around the recess, wherein
the terminal abuts the protrusion.

3. The battery pack according to claim 1, further comprising:
an insulating plate that is insulative and is disposed on a wall surface of the holder storage space, wherein
the recess is on the insulating plate.

4. The battery pack according to claim 3, wherein
the insulating plate includes a plurality of paper sheets that are stacked.

5. The battery pack according to claim 3, wherein
the insulating plate includes:
a first surface including the recess; and
a second surface extending at an angle from the first surface.

6. The battery pack according to any one of claims 1 to 5, wherein
the terminal holder includes:
a resin member; and
a metal piece protruding from a surface of the resin member, and
the terminal is joined to the metal piece and integrated with the terminal holder.

7. The battery pack according to claim 6, wherein
the terminal is joined to the metal piece by spot welding.

8. The battery pack according to claim 6, wherein
the terminal is bent in an L shape, is joined to the metal piece at one end, is bent in a V shape at an other end, and includes a connection terminal that is connected to an external element.

9. A method for manufacturing a battery pack including:
one or more secondary battery cells each including electrodes that are positive and negative;
a terminal that is made of metal and is electrically connected to the electrodes of the one or more secondary battery cells;
a terminal holder including a resin member and a metal piece protruding from a surface of the resin member, the terminal holder being integrated with the terminal; and
an outer covering case that stores the one or more secondary battery cells and includes a holder storage space that stores the terminal holder, the method comprising:
joining the terminal to the metal piece by spot welding; and
positioning the terminal holder in the holder storage space to cause a portion of the terminal to face a recess on a part of the holder storage space of the outer covering case.
